# EUROPEAN PATENT APPLICATION

(11) **EP 2 101 254 A2**
(43) Date of publication of application: **16.09.2009**
(21) Application number: 08171097.2
(22) Date of filing: 09.12.2008
(51) Int. Cl.: G06F 3/06

(54) **Computer system and operation takeover method**

(30) Priority: 12.03.2008 JP 2008062408
(71) Applicant: Hitachi, Ltd., Chiyoda-ku Tokyo 100-8220 (JP)
(72) Inventor: Asano, Masayasu, Tokyo 100-8220 (JP); Nakagawa, Hirotaka, Tokyo 100-8220 (JP)
(74) Representative: Borchert, Uwe Rudolf

(57) **Abstract**

This computer system has a first storage apparatus including a first volume, a second storage apparatus for providing the first virtual volume to a host computer, a third storage apparatus for switching the access to the first virtual volume of the host computer and providing a second virtual volume to the host computer, and a management computer for managing the first to third storage apparatuses. The management computer includes a detection unit for detecting the operation of the first virtual volume upon switching the access to the first virtual volume of the host computer to the second virtual volume, and an execution command unit for issuing a command to execute the operation of the first virtual volume detected with the detection unit in the second virtual volume of the third storage apparatus when the access is switched to the second virtual volume,

## Description

The present invention relates to technology for taking over the operation of a storage apparatus function (hereinafter also referred to as a "storage operation") between a plurality of storage apparatuses in a computer system using a host computer or a management computer, and storages (hereinafter also referred to as "storage apparatuses").

Technology is disclosed for enabling the uninterrupted operation in a computer system using a storage apparatus, even when the storage apparatus itself shuts down due to a failure or a planned shutdown of the storage apparatus, by executing the application operating in a host computer with a separate storage apparatus (Japanese Patent Laid-Open Publication No. 2007-72538).

Japanese Patent Laid-Open Publication No. 2007-72538 configures a computer system with a host computer, a management server, first and second storage apparatuses adopting external storage connection (hereinafter also referred to as "external connection") technology, and one or more third storage apparatuses virtualized with the external connection, wherein a third volume (hereinafter also referred to as a "volume") in the third storage apparatus is virtualized as a first volume of the first storage apparatus.

Based on technology of switching the volume to become the I/O access target from the first volume to a second volume by defining a second volume for virtualizing the third volume in the second storage apparatus, taking over attributes of the first volume, and operating simultaneously with the host computer, the computer system is capable of continuing the operation of the application operating in the host computer even when the storage apparatus itself shuts down due to a failure or a planned shutdown of the storage apparatus.

Nevertheless, the foregoing conventional method entails the following problems. Specifically, with the computer system adopting the technology described above, during normal operation, the first storage apparatus in certain cases performs the operation of the storage apparatus function such as data shredding or data migration according to the business operation in addition to the I/O access processing of the host computer.

If a failure occurs in the first storage apparatus itself during the performance of a storage operation such as data shredding or data migration, the I/O access processing of the host computer will be taken over by the second storage apparatus, but the processing of the storage apparatus function will not be taken over by the second storage apparatus.

Thus, in this case, there is a possibility that this computer system will continue to operate while the processing of the storage apparatus function is stopped and the environment of the storage apparatus according to the business operation is not configured in the computer system. For instance, if the processing of data shredding is not taken over, data will remain as is in the storage apparatus, and there is a risk of such data being read. Moreover, if the processing of data migration is not taken over, data will not be migrated, and there is a possibility that the system performance will be affected.

The present invention was made in view of the foregoing points. Thus, an object of the present invention is to propose a highly reliable computer system and operation takeover method.

In order to achieve the foregoing object, the present invention provides a computer system comprising a first storage apparatus including a first volume for storing data sent from a host computer, a second storage apparatus including a first virtual volume as a virtualization of a volume of the first storage apparatus, and for providing the first virtual volume to the host computer, a third storage apparatus including a second virtual volume as a virtualization of a first volume of the first storage apparatus which is the same as the first virtual volume, and for switching the access to the first virtual volume of the host computer and providing the second virtual volume to the host computer, and a management computer for managing the first storage apparatus, the second storage apparatus, and the third storage apparatus. The management computer includes a detection unit for detecting the operation of the first virtual volume upon switching the access to the first virtual volume of the host computer to the second virtual volume, and an execution command unit for issuing a command to execute the operation of the first virtual volume detected with the detection unit in the second virtual volume of the third storage apparatus when the access is switched to the second virtual volume.

In other words, with the present invention, when the access from the host computer to the first virtual volume of the second storage apparatus is switched to the second volume of the third storage apparatus, if the storage apparatus operation to the first virtual volume of the second storage apparatus is active at such point in time, an environment is created so that the operation of the first virtual volume that is active in the first virtual volume of the second storage apparatus can be performed in the second virtual volume of the third storage apparatus, and the operation of the first virtual volume that is active in the second virtual volume of the third storage apparatus is executed in the second volume of the third storage apparatus.

The present invention additionally provides an operation takeover method of a computer system comprising a first storage apparatus including a first volume for storing data sent from a host computer, a second storage apparatus including a first virtual volume as a virtualization of a volume of the first storage apparatus, and for providing the first virtual volume to the host computer, a third storage apparatus including a second virtual volume as a virtualization of a first volume of the first storage apparatus which is the same as the first virtual volume, and for switching the access to the first virtual volume of the host computer and providing the second virtual volume to the host computer, and a management computer for managing the first storage apparatus, the second storage apparatus, and the third storage apparatus. The operation takeover method comprises a first step of a detection unit of the management computer detecting the operation of the first virtual volume upon switching the access to the first virtual volume of the host computer to the second virtual volume, and a second step of an execution command unit of the management computer issuing a command to execute the operation of the first virtual volume detected at the first step in the second virtual volume of the third storage apparatus when the access is switched to the second virtual volume.

The present invention further provides a computer system comprising a first storage apparatus including a first volume for storing data sent from a host computer, a second storage apparatus including a first virtual volume as a virtualization of a volume of the first storage apparatus, and for providing the first virtual volume to the host computer, a third storage apparatus including a second volume for storing the replication of data stored in a first volume of the first storage apparatus, a fourth storage apparatus including a second virtual volume as a virtualization of a second volume of the third storage apparatus, and for switching the access to the first virtual volume of the host computer and providing the second virtual volume to the host computer, and a management computer for managing the first storage apparatus, the second storage apparatus, the third storage apparatus and the fourth storage apparatus. The second storage apparatus includes a synchronous replication unit for sending data sent from the host computer to the fourth storage apparatus via synchronous replication. The management computer includes a detection unit for detecting the operation of the first virtual volume upon switching the access to the first virtual volume of the host computer to the second virtual volume, and an execution command unit for issuing a command to execute the operation of the first virtual volume detected with the detection unit in the second virtual volume of the fourth storage apparatus when the access is switched to the second virtual volume.

Accordingly, with the present invention, even if a failure or the like occurs in the second storage apparatus of the computer system and such second storage apparatus is shut down, in addition to the processing continuity of the computer, the storage operation corresponding to the environment of the second storage apparatus can be taken over by the third storage apparatus. In addition, irrespective of the shutdown of the second storage apparatus, the storage operation can be continued without requiring the mediation of a user.

According to the present invention, it is possible to realize a highly reliable computer system and operation takeover method.

The preferred embodiments of the present invention are now explained in detail with reference to the attached drawings.
- Fig. 1: is a diagram showing an example of the configuration of a computer system according to the first to fourth and sixth embodiments of the present invention;
- Fig. 2: is diagram showing an example of the configuration of a storage apparatus configuring the computer system according to the first to sixth embodiments;
- Fig. 3: is a diagram showing an example of the configuration of a host computer configuring the computer system according to the first to sixth embodiments;
- Fig. 4: is a diagram showing an example of the configuration of a management computer configuring the computer system according to the first to sixth embodiments;
- Fig. 5: is a diagram showing an example of a table to be used in the computer system according to the first to sixth embodiments;
- Fig. 6: is a diagram showing an example of a table to be used in the computer system according to the first to sixth embodiments;
- Fig. 7: is a diagram showing an example of a table to be used in the computer system according to the first to sixth embodiments;
- Fig. 8: is a diagram showing an example of a table to be used in the computer system according to the first to sixth embodiments;
- Fig. 9: is a diagram showing an example of a table to be used in the computer system according to the first to sixth embodiments;
- Fig. 10: is a diagram showing an example of a flowchart of the storage operation takeover to be used in the computer system according to the first embodiment;
- Fig. 11: is a diagram showing an example of a flowchart of the storage operation takeover to be used in the computer system according to the second embodiment;
- Fig. 12: is a diagram showing an example of a flowchart of the storage operation reception to be used in the computer system according to the third embodiment;
- Fig. 13: is a diagram showing an example of a table to be used in the computer system according to the fourth embodiment;
- Fig. 14: is a diagram showing an example of a flowchart of the storage operation reception to be used in the computer system according to the fourth embodiment;
- Fig. 15: is a diagram showing an example of the configuration of a computer system according to the fifth embodiment; and
- Fig. 16: is a diagram showing an example of a setting screen to be used in the computer system according to the sixth embodiment.

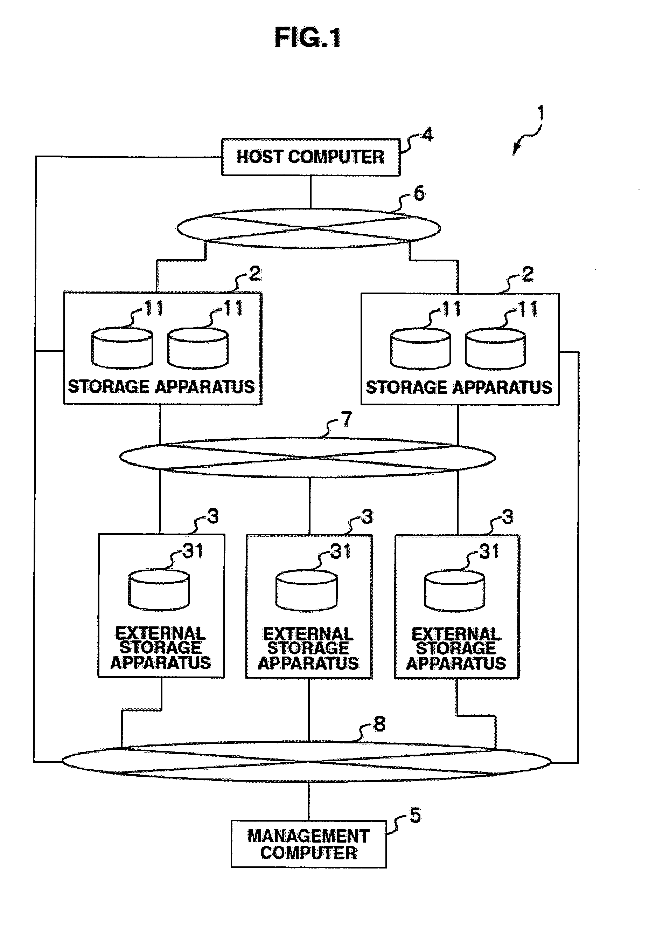

Fig. 1 is a diagram showing an example of the configuration of a computer system 1 according to the first to fourth and sixth embodiments of the present invention. The computer system 1 comprises a storage apparatus 2, an external storage apparatus 3, a host computer 4, and a management computer 5.

The storage apparatus 2 is an apparatus for receiving the I/O from the host computer 4, and includes a virtual volume 11 to be accessed from the host computer 4 via a first storage network 6.

The external storage apparatus 3 is an apparatus for receiving the I/O from the storage apparatus 2, and includes an external volume 31 to be accessed from the storage apparatus 2 via a second storage network 7.

Here, the virtual volume 11 is intangible, and is a volume that virtually provides a capacity to the host computer 4. If the host computer 4 accesses the virtual volume 11, the actual data is stored in the external volume 31 of the external storage apparatus 3.

Incidentally, as described in the background art, there is a configuration where a plurality of virtual volumes 11 access the same external volume 31 in the storage apparatus 2 and the external storage apparatus 3. This kind of configuration is used when a failure occurs to one storage apparatus 2 and the processing cannot be continued, and such processing is to be continued with the other storage apparatus 2.

In other words, with the computer system 1, even if a failure occurs during the access of data in the virtual volume 11 (i.e., external volume 31) of one storage apparatus 2, as a result of accessing the virtual volume 11 of another storage apparatus 2 and thereby accessing the same external volume 31 as the external volume 31 that is accessing the virtual volume 11 of the failed storage apparatus 2, the data of the same external volume 31 can be accessed from a different storage apparatus 2.

The host computer 4, as described above, is an apparatus for accessing data in the storage apparatus 2 by inputting and outputting such data to and from the storage apparatus 2. The host computer 4 is an apparatus for primarily operating the business program of the user.

The management computer 5 is a computer for managing the storage apparatus 2, the external storage apparatus 3, and the host computer 4 via the management network 8.

The first storage network 6, the second storage network 7 and the management network 8 are sometimes formed from the same protocol (for instance, TCP/IP (Transmission Control Protocol/Internet Protocol)), and sometimes formed from separate protocols such as the first storage network 6 and the second storage network 7 being formed from an FC (Fibre Channel) protocol, and the management network 8 being formed from a TCP/IP.

The first storage network 6, the second storage network 7 and the management network 8 may be formed from the same protocol, formed on the same network, or formed independently depending on the difference in usage or difference in setting.

Details regarding the storage apparatus 2, the external storage apparatus 3, the host computer 4 and the management computer 5 will be described later.

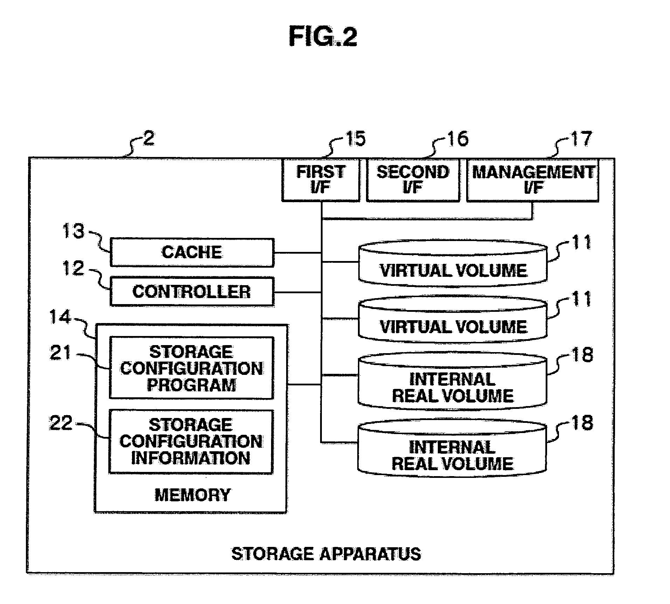

Fig. 2 is a diagram showing an example of the configuration of the storage apparatus 2 according to the first to sixth embodiments of the present invention.

The storage apparatus 2 comprises a virtual volume 11, a controller 12 for performing the processing of the storage apparatus 2, a cache 13 to be used for improving the performance of the storage apparatus 2, a memory 14, a first I/F 15 connected to the first storage network 6, a second I/F 16 connected to the second storage network 7, a management I/F 17 connected to the management network 8, and an internal real volume 18 as a real volume in the storage apparatus 2.

Depending on the protocol and the setting status of the first storage network 6, the second storage network 7 and the management network 8, the first I/F 15, the second I/F 16 and the management I/F 17 may be integrated. Specifically, with the computer system 1, for example, if the first storage network 6, the second storage network 7 and the management network 8 are of the same protocol, the first I/F 15, the second I/F 16 and the management I/F 17 may be integrated into a single interface.

The memory 14 stores a storage configuration program 21 and storage configuration information 22.

The storage configuration program 21 is a program for managing the configuration of the storage apparatus 2, and includes an external connection function for accessing data by associating the external volume 31 of the external storage apparatus 3 in response to the access of the virtual volume 11 of the storage apparatus 2, a function for switching the access target to the virtual volume 11 of the other storage apparatus 2 described above and using the external volume 31 of the external storage apparatus 3 (hereinafter also referred to as a "volume switch function"), a function for causing a computer such as the host computer to recognize the virtual volume 11 via the first storage network 6, and a function for performing data migration with the virtual volume 11 and shredding the data of the external volume 31 via the virtual volume 11 (hereinafter also referred to as a "storage function").

The storage configuration information 22 is configuration information to be used in the storage configuration program 21.

It is not necessary to comprise the internal real volume 18 if all data are to be operated by being stored in the external volume 31 of the external storage apparatus 3. The internal real volume 18 may be a storage medium itself such as a hard disk or a flash memory, or a logical volume that realizes a volume of a RAID (Redundant Arrays of Inexpensive Disks) configuration by comprising a plurality of hard disks or flash memories.

If the storage configuration program 21 is referred to as the subject, in reality the processing is performed by the controller 12 that executes the storage configuration program 21.

The external storage apparatus 3 can also be applied as the same apparatus as the storage apparatus 2. The external volume 31 is equivalent to the internal real volume 18 of the storage apparatus 2. Functions such as the volume switch function and the external connection function of the storage configuration program 21 shown in the storage apparatus 2 do not have to be loaded in the external storage apparatus 3.

The external storage apparatus 3 is only required to include a function for causing the external volume 31 to be recognized by the host computer 4 and the storage apparatus 2, and, while it may include the data migration or data shredding function, it is not required to include the first I/F 15.

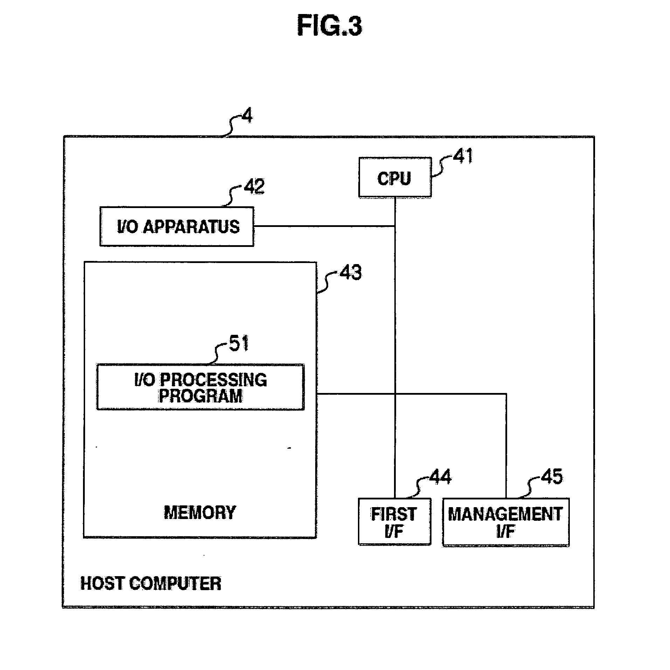

Fig. 3 is a diagram showing the configuration of the host computer 4 according to the first to sixth embodiments of the present invention.

The host computer 4 comprises a CPU 41, an I/O apparatus 42 for sending and receiving information to and from the user, a memory 43, a first I/F 44 connected to the first network 6 for communicating with the storage apparatus 2, and a management I/F 45 connected to the management network 8 for communicating with the management computer 5, and is the associated computer for performing the processing of the application.

The memory 43 stores an I/O processing program 51.

The I/O processing program 51 is a program for switching the access to the virtual volume 11 of one storage apparatus 2 to the virtual volume 11 of another storage apparatus 2 so as to enable the access to data of the same external volume 31, even if a failure occurs during the access of data in the virtual volume 11 (i.e., external volume 31) of one storage apparatus 2, by accessing the virtual volume 11 of another storage apparatus 2 and thereby accessing the same external volume 31 as the external volume 31 that was being accessed by the virtual volume 11 of the failed storage apparatus 2.

If it is not necessary to switch the access with the host computer 4 itself; for instance, in a case
where the application of the host computer 4 is not continued and stopped, and the user is to change the setting, it is not necessary to comprise the I/O processing program 51.

If the I/O processing program 51 is referred to as the subject, in reality the processing is performed by the CPU 41 that executes the I/O processing program 51.

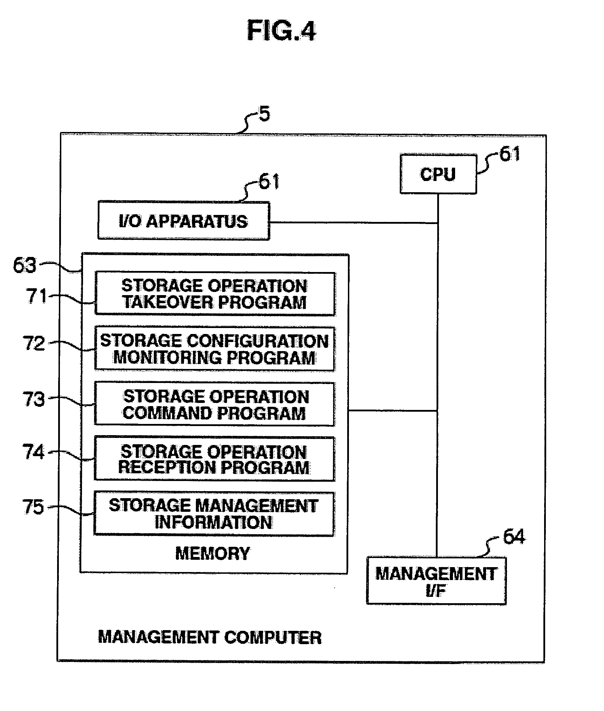

Fig. 4 is an example of a diagram showing the configuration of the management computer 5 according to the first to sixth embodiments of the present invention.

The management computer 5 is a computer comprising a CPU 61, an I/O apparatus 62 for sending and receiving information to and from the user, a memory 63, and a management I/F 64 connected to the management network 8 for communicating with the storage apparatus 2, the external storage apparatus 3 and the host computer 4.

The memory 63 stores a storage operation takeover program 71, a storage configuration monitoring program 72, a storage operation command program 73, a storage operation reception program 74, and storage management information 75.

The storage operation takeover program 71, the storage configuration monitoring program 72, the storage operation command program 73 and the storage operation reception program 74 realize the processing of the first to sixth embodiments of the present invention. The storage management information 75 is information to be used in the storage operation takeover program 71, the storage configuration monitoring program 72, the storage operation command program 73 and the storage operation reception program 74.

If the respective programs of the storage operation takeover program 71, the storage configuration monitoring program 72, the storage operation command program 73 and the storage operation reception program 74 are to become the subject, in reality the processing is performed by the CPU 61 that executes the various programs.

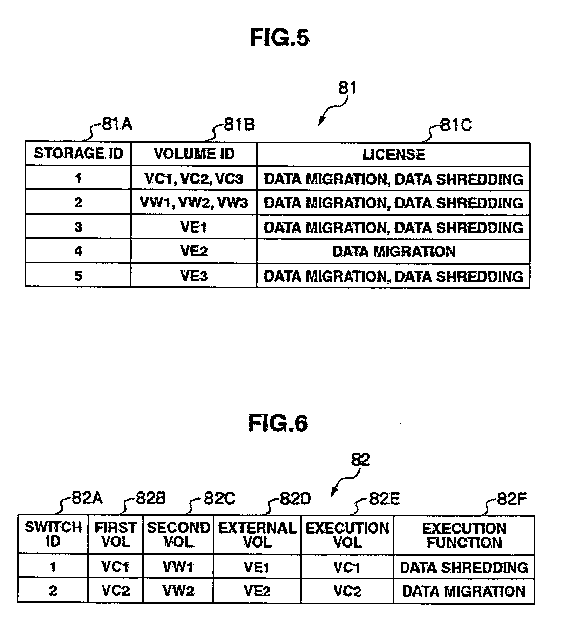

Fig. 5 to Fig. 9 are diagrams showing an example of the information of the storage management information 75 according to the first to sixth embodiments of the present invention.

The storage management information 75 is configured from a storage information table 81, a virtual volume information table 82, a host information table 83, an external connection information table 84, and a data migration information table 85.

Fig. 5 is a diagram showing an example of the storage information table 81.

The storage information table 81 is configured from a storage ID 81A as the ID for identifying the storage apparatus 2 and the external storage apparatus 3, a volume ID 81 B as the ID for identifying the volumes existing in the storage apparatus 2, and a license 81C for managing the license information of the storage function. The license 81C shows the license issued in the storage apparatus 2 and the external storage apparatus 3.

Fig. 5 shows a state where the storage apparatus 2 having the storage ID 81A of "1" has three volumes in which the volume ID 81B is "VC1, VC2, VC3," is provided with the license 81C for the function of "data migration" and "data shredding," and is available as a storage function.

In order to simplify the explanation in this embodiment, unless otherwise specified herein, issuance of a license shall be required only for "data migration" and "data shredding." Thus, functions of the storage apparatus 2 other than data migration and data shredding such as the path setting, external connection, and volume switch function to the host computer 4 operable based on the storage configuration program 21 can be executed without the license 81C.

Fig. 6 is a diagram showing an example of the virtual volume information table 82.

The virtual volume information table 82 is a table for managing the related information of the switch volume in the volume switch function. The virtual volume information table 82 is configured from a switch ID 82A for identifying the volume-related information of the volume switch, a first VOL 82B showing the virtual volume before the volume switch at the time the volume switch function is set, a second VOL 82C showing the virtual volume 11 to become the volume switch destination when a failure or the like occurs in the first VOL 82B, an external VOL 82D showing the external volume 31 storing the actual data of the first VOL 82B and the second VOL 82C, an execution VOL 82E showing whether the first VOL 82B or the second VOL 82C is being accessed from the host computer 4, and an execution function 82F showing which storage function is being operated in the execution VOL 82E.

For instance, according to the example illustrated in Fig. 6, information of the switch ID 82A of "1" shows that the first VOL 82B as the volume before the volume switch is "VC1," the virtual volume 11 to be switched to when a failure or the like occurs in the "VC1" is "VW1," and the external VOL 82D as the external volume 31 storing the actual data of the "VC1" and the "VW1" is "VE1." In addition, information of the switch ID 82A of "1" shows that a failure or the like has not occurred in the "VC1" and is operating normally by indicating that the execution VOL 82E is "VC1," and shows that data shredding is being performed in the "VC1" based on the indication of the execution function 82F.

The related information of the volume switch based on the first VOL 82B, the second VOL 82C, and the external VOL 82D may be input by the user, or created with a program of the management computer 5 during the volume switch.

Information of the execution VOL 82E may also be input by the user, or created with a program of the management computer 5 during the volume switch.

If a volume switch is to be set from a plurality of first VOLs 82B to the second VOL 82C, the switch IDs 82A will be separate and the information of the first VOL 82B will also be registered separately, but the information of the second VOL 82C will be the same. Here, if the first storage apparatus 2 itself becomes inoperable, the switch destinations of the plurality of first VOLs 82B will overlap. Thus, in this case, priority is set to the switch destination, or a separate second VOL 82C is applied when the switch destinations overlap.

The execution function 82F stores information based on the program of the management computer 5 from the time of actually performing the operation of the storage function of the storage apparatus 2 (hereinafter also referred to as the "storage operation") until the completion of the storage operation; that is, during the execution of the storage operation.

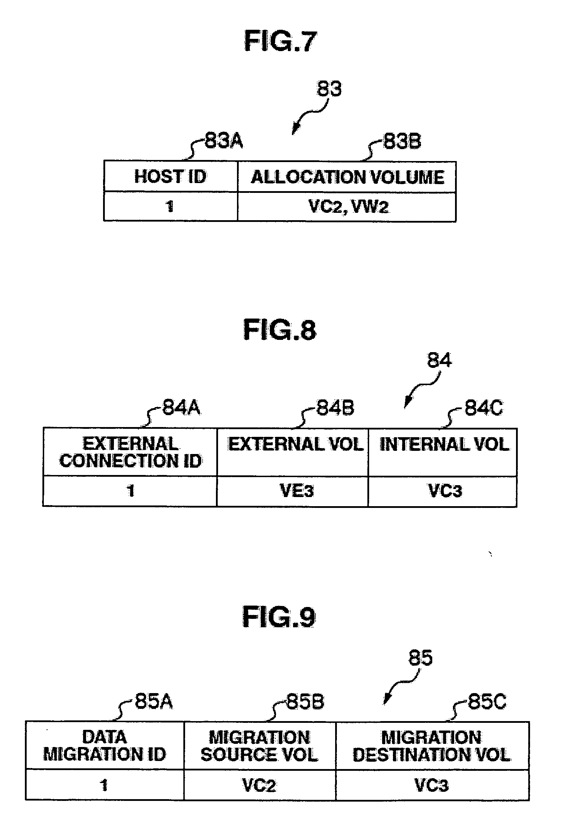

Fig. 7 is a diagram showing an example of the host information table 83.

The host information table 83 is configured from a host ID 83A for identifying the host computer 4 that is using the volume of the storage apparatus 2, and an allocation VOL 83B as the volume that is allocated to the host computer 4.

The allocation VOL 83B is equivalent to the volume that allocated a path to the host computer 4. Nevertheless, it is necessary to refer to the virtual volume information table 82 to determine whether access is possible based on the foregoing volume switch function. Specifically, the virtual volume information table 82 shows that the first VOL 82B is "VC2," the second VOL 82C related to the "VC2" is "VW2," and the execution VOL 82E is "VC2." Thus, the virtual volume information table 82 shows that the host computer 4 having the host ID 83A of "1" is able to access the "VC2," but is not able to access the "VW2."

Fig. 8 is a diagram showing an example of the external connection information table 84.

The external connection information table 84 is configured from an external connection ID 84A for identifying the relation of the external connection, an external VOL 84B showing the external volume 31 storing the actual data based on the external connection function, and an internal VOL 84C showing the virtual volume 11 of the external VOL 84B based on the external connection function.

The external connection information table 84 has no setting of the volume switch managed in the virtual volume information table 82, and manages the information of the volumes configured only with the external connection function.

Fig. 9 is a diagram showing an example of the data migration information table 85.

The data migration information table 85 is configured from a data migration ID 85A for identifying the relation of the data migration, a migration source VOL 85B showing the volume of the migration source, and a migration destination VOL 85C showing the volume of the migration destination.

The example illustrated in Fig. 9 shows that the migration source VOL 85B is "VC2" and the migration destination VOL 85B is "VC3."

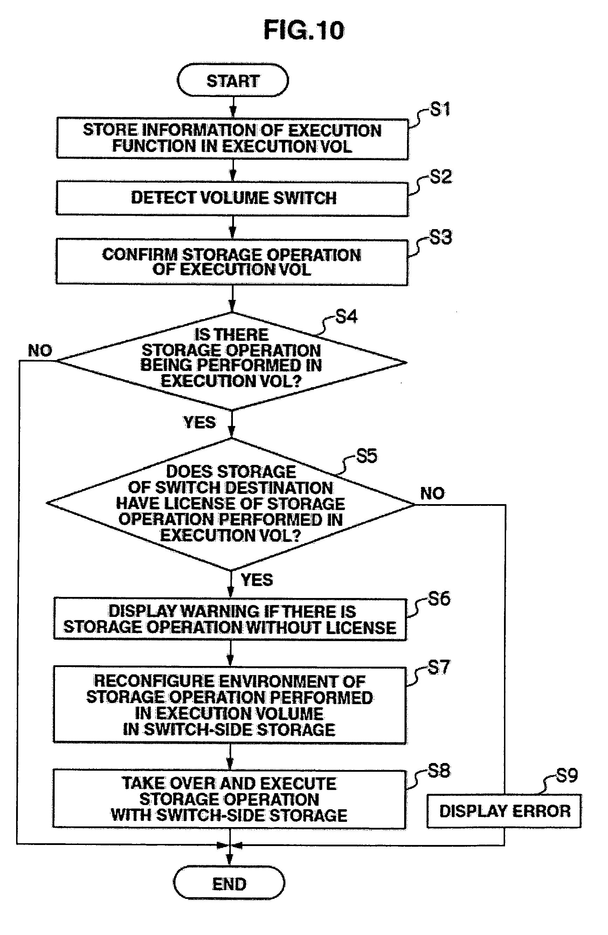

Fig. 10 shows an example of a flowchart concerning the operation takeover processing at the time of the volume switch in the first embodiment of the present invention.

In Fig. 10, processing of the storage operation takeover program 71, the storage configuration monitoring program 72, and the storage operation command program 73 of the management computer 5 is performed by the CPU 61. In order to simplify the explanation in this embodiment, data shredding is taken as an example of the storage operation to be performed as the operation of the target volume itself.

A mode of a volume other than the volume switch target volume in data migration or the like will be explained in the second embodiment. No limitation is applied to the other storage functions in this embodiment.

Foremost, the CPU 61 stores the status of storage operation of the virtual volume 11 set to perform the volume switch of the storage apparatus based on the storage configuration monitoring program 72 (step S1). Specifically, the CPU 61 stores the information of the execution function 82F operating in the execution VOL 82E stored in the virtual volume information table 82. Here, in order to control the timing of execution, the CPU 61 stores the information upon detecting that the execution of the execution function 5106 has started, and deletes the information of the execution function 5106 after the execution is complete,

The CPU 61 may also stored in the information of the virtual volume information table 82 in the storage apparatus 2 based on the program for issuing an execution function command; that is, the storage operation command program 73. The CPU 61 ends the processing at step S1, and thereafter proceeds to step S2.

Subsequently, the CPU 61 detects the volume switch based on the storage configuration monitoring program 72 (step S2).

Here, the CPU 61 may periodically confirm whether a volume switch has been made on the side of the storage apparatus 2 from the management computer 5, or receive a notice from the side of the storage apparatus 2 to the effect that a volume switch has been made. The CPU 61 ends the processing at step S2, and thereafter proceeds to step S3.

Subsequently, the CPU 61 confirms the storage operation that is being performed in the execution VOL 82E to be subject to the volume switch based on the storage operation takeover program 71 (step S3).

For instance, assuming that an example of the information at the point in time immediately after the volume switch where the information of the storage configuration information 75 has not been updated is as shown in Fig. 6, the information of the volume switch in which the switch ID 82A of the virtual volume information table 82 is "1" shows that data shredding was being performed in the execution VOL 82E of "VC1" based on the information of the execution function 82F. Specifically, the information of the volume switch in which the switch ID 82A of the virtual volume information table 82 is "1" shows that the volume switch was made while data shredding was being performed. The CPU 61 ends the processing at step S3, and thereafter proceeds to step S4.

Subsequently, the CPU 61 confirms whether there was an active storage operation in the execution VOL 82E based on the storage operation takeover program 71 (step S4).

Specifically, the CPU 61 confirms whether there is information in the execution function 82F based on the information of the virtual storage information table 82. The CPU 61 ends the processing at step S4, and proceeds to step SP5 if there was a storage operation (step S4: YES), and ends this flowchart if there was no storage operation (step S4: NO).

For instance, according to the example illustrated in Fig. 6, the CPU 61 proceeds to step SP5 since the virtual volumes 11 of "VC1" and "VC2" of the execution VOL 82E were respectively performing data shredding and data migration. Meanwhile, the CPU 61 ends this flowchart if no information is input in any of the virtual volumes 11 of the execution function 82F.

Subsequently, the CPU 61 confirms whether the storage apparatus 2 of the switch destination has a license of the storage operation that was being performed in the execution VOL 82E based on the storage operation takeover program 71 (step S5).

Specifically, the CPU 61 uses the second VOL 82C of the virtual volume information table 82 and the volume ID 81 B of the storage management table 81 to confirm whether the storage apparatus 2 of the switch destination has a license for a function. The CPU 61 ends the processing at step S5, and proceeds to step S6 if there is a license (step S5: YES), and proceeds to step S9 if there is no license (step S5: NO).

For instance, according to the example illustrated in Fig. 6, in the case of the switch ID 82A of "1," since the first VOL 82B of "VC1" was performing data shredding in the execution VOL 82E, the CPU 61 confirms whether the storage apparatus 2 to which the second VOL 82C of "VW1" to become the switch destination belongs has a data shredding license.

Here, the CPU 61 confirms the license information of the storage apparatus 2 in the storage information table 81. The CPU 61 recognizes that the storage apparatus 2 to which the "VW1" belongs is the storage apparatus 2 having the storage ID 81A of "2." Further, the CPU 61 recognizes that the storage apparatus 2 having the storage ID 81A of "2" has a data shredding license from the information of the license 81C. Thus, according to this example, the CPU 61 proceeds to step S6 since it deems that there is a license (step S5: YES). Meanwhile, the CPU 61 proceeds to step S9 if the storage apparatus 2 having the storage ID 81A of "2" has no data shredding license (step S5: NO).

The CPU 61 does not have to execute step S5 if it is not necessary to confirm the existence of a license; that is, if the storage operation such as data shredding and data migration can be executed without having to set a license.

Subsequently, the CPU 61 performs notification processing of displaying a warning or the like indicating that the storage operation has no license if there is no license in certain operations based on the storage operation takeover program 71 (step S6). The CPU 61 ends the processing at step S6, and thereafter proceeds to step S7.

Subsequently, the CPU 61 re-configures the environment of the storage operation that was being performed in the execution VOL 82E in the switch-side storage apparatus 2 based on the storage operation takeover program 71 (step S7).

Incidentally, the CPU 61 does not have to execute the processing at step S7 if the storage operation such as data shredding can be executed from the switched virtual volume 11. In addition, if it is necessary to configure an environment for performing the storage operation such as in a case where there is a license but it has not actually been validated yet, the CPU 61 executes this at step S7.

If the function requires the setting of a volume other than the switched virtual volume 11 as in data migration or data shredding, the CPU 61 executes this at step S7. The processing at step S7 concerning data migration and data replication will be described in the second embodiment as described above. The CPU 61 ends the processing at step S7, and thereafter proceeds to step S8.

Subsequently, the CPU 61 issues a command to execute the storage operation in the switch-side storage apparatus 2 according to the information configured at step S7 based on the storage operation command program 73 (step S8).

For example, if the volume switch of the switch ID 82A of "1" is performed in the virtual volume information table 82, the CPU 61 treats the volume of the second VOL 82C of "VW1" as the execution VOL 82E. Thus, the CPU 61 issues a command to perform data shredding in the volume of the second VOL 82C of "VW1." After issuing the command, the CPU 61 updates the execution VOL 82E as the information of the virtual volume information table 82.

Specifically, according to the foregoing example, in the case of volume switch information having the switch ID 82A of "1," the CPU 61 updates the information of the execution VOL 82E, which was "VC1" before step S8, to "VW1."

The CPU 61 may execute the storage operation from the start again. However, the CPU 61 may accelerate the execution of the storage operation by managing the progress of the storage operation, and, after the volume switch, skipping the operation that does not need to be executed; that is, by executing the operation from midway.

For example, in the case of data shredding, the CPU 61 may manage the addresses that could be erased, and command the switch-side storage apparatus 2 to perform data shredding only to the addresses that could not be erased, and execute data shredding on the side of the switch-side storage apparatus 2. Since the CPU 61 sometimes performs data shredding a plurality of times and with a plurality of algorithms, it may also manage the shredding count and the used algorithm and sequence in the management computer 5, and only perform the step required for data shredding from the volume of the switch-side storage apparatus 2. The CPU 61 ends the processing at step S8, and thereafter ends this flowchart.

Meanwhile, if the CPU 61 determines that there is no license based on the storage operation takeover program 71 (step S5: NO), it executes error notification processing to notify the user that the storage operation cannot be taken over by the target volume (step S9). The CPU 61 notifies the foregoing error, and thereafter ends this flowchart.

Like this, with the computer system 1, as a result of the CPU 61 executing the processing shown in this flowchart, even if a failure occurs in the active volume or the storage apparatus 2 handling the active volume and the volume switch is made, it is possible to take over the storage operation that was being executed before the volume switch, and continue the storage operation with the volume of the storage apparatus 2 of the switch destination.

The computer system 1 may also be provided with a step for validating the switch-side license upon confirming the license at step S5. In other words, in this embodiment, the valid duration of the license may be extended by invalidating the license of the storage operation until the switch, and adapting the license only when it is validated.

The computer system 1 may also bill a license fee only to a volume with a validated license if the license fee is to be changed according to the volume capacity of the license. The computer system 1 may also invalidate the license if the storage operation is taken over in the volume before the switch. If the license is invalidated in the computer system 1, the charge may be reduced for the portion in which the license fee was invalidated.

The computer system 1 may also prepare a mode for performing the takeover of the storage operation and a conventional mode for not performing the takeover of the storage operation when commanding or pre-setting the volume switch function. In the computer system 1, if the mode for taking over the storage operation is designated with the volume switch function command, takeover processing of the storage operation may be performed as in this embodiment. Meanwhile, if a conventional mode for not taking over the storage operation is designated or the foregoing modes are not designated, the processing of this embodiment may be omitted.

If the computer system 1 performs the same processing upon returning the execution VOL 82E of the storage apparatus 2 after the switch to the side of the storage apparatus 2 before the switch, it is possible to return such volume to the volume of the storage apparatus 2 before the switch. If the computer system 1 changes the execution VOL 82E in this case also, it rewrites the information of the execution VOL 82E of the virtual volume information table 82 with the volume ID 81 B of the volume that is being actually executed. In this case also, the computer system 1 may determine the takeover status of the storage operation by differentiating the takeover modes of the storage operation described above.

The computer system 1 may also delete the mapping of the virtual volume 11 and the external volume 31 if the storage operation of the data shredding itself is complete, for safety reasons, in the storage operation of data shredding in this flowchart. If the configuration of the same storage apparatus 2 is to be used once again after the data shredding, the computer system 1 may also acquire a request from the user and maintain the mapping of the virtual volume 11 and the external volume 31.

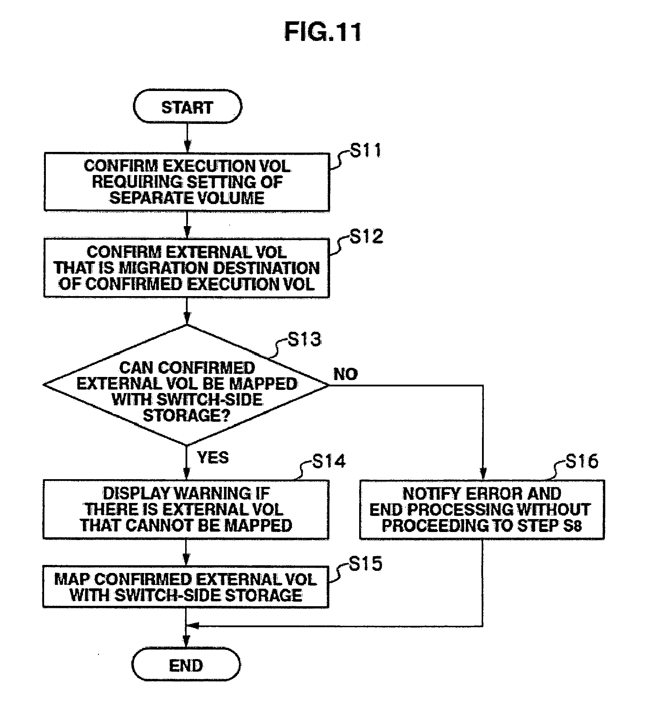

Fig. 11 is an example of a flowchart concerning the operation takeover processing during the volume switch in the second embodiment of the present invention.

In Fig. 11, the processing of the storage operation takeover program 71 of the management computer 5 is performed by the CPU 61.

The flowchart of Fig. 11 represents the processing corresponding to the processing at step S7 of the flowchart shown in Fig. 10. In this embodiment, the processing differs from step S7 of Fig. 10 in that a volume required for the storage operation takeover is set in addition to the setting of the volume switch in data migration or the like.

In the case of the example of data migration also, the processing other than step S7 is the same as the examples of the respective steps of data shredding explained with reference to Fig. 10.

Here, the CPU 61 confirms the operation status of data migration at step 6000 (step S1), detects a volume switch (step S2), and confirms whether data migration was being performed in the execution VOL 82E based on the information of the virtual volume information table 82 (step S3). According to the example illustrated in Fig. 6, if the CPU 61 confirms that data migration is being performed in the execution VOL 82E, it proceeds to step S5.

Subsequently, the CPU 61 confirms the license of data migration in the storage apparatus 2 of the switch destination based on the information of the storage information table 81 and the virtual volume information table 82. According to the examples of Fig. 5 and Fig. 6, the CPU 61 confirms that there is a data migration license in the storage apparatus 2 of "VW2" (storage apparatus 2 having the storage ID 81A of "2"), which is the switch destination of "VC2" that was subject to data migration, and then proceeds to step S6.

Subsequently, since data migration is to be performed in "VW2" only according to the example of Fig. 6, the CPU 61 does not notify a warning here and proceeds to step S7.

Subsequently, the CPU 61 performs the processing of the flowchart of Fig. 11 at step S7 according to this embodiment.

The CPU 61 confirms the execution VOL 82E requiring the setting of a separate volume based on the storage operation takeover program 71 (step S11). In other words, the CPU 61 confirms the execution VOL 82E in which the execution function 82F of the virtual volume information table 82 is to perform a storage operation such as "data migration" requiring the setting of a separate volume as the migration destination.

According to the example illustrated in Fig. 6, the volume switch information in which the switch ID 82A of the virtual volume information table 82 is "2" shows that the execution VOL of "VC2" is "data migration," and shows that data migration is being performed in that volume. The CPU 61 ends the processing at step S11, and thereafter proceeds to step S12.

Subsequently, the CPU 61 confirms the external volume 31 of the external connection destination that is set as the migration destination of the execution VOL 82E requiring the setting of a separate volume based on the storage operation takeover program 71 (step S12). In other words, the CPU 61 confirms the external VOL 84B that is associated as an external connection with the separate volume set as the migration destination in the data migration.

According to the examples illustrated in Fig. 5 to Fig. 9, the CPU 61 confirms that the volume as the migration destination in relation to the volume of "VC2" subject to data migration confirmed at step S11 is "VC3" based on the data migration information table 85. The CPU 61 thereafter recognizes that the "VC3" is an external connected virtual volume 11, and the external VOL 84B is "VE3" based on the external connection information table 84. Thus, the CPU 61 confirms that the external VOL 84B of the migration destination is "VE3" in relation to the volume of "VC2." The CPU 61 ends the processing at step S12, and thereafter proceeds to step S13.

Subsequently, the CPU 61 determines whether the external VOL 84B confirmed at step S12 can be mapped with the switch-side storage apparatus 2 based on the storage operation takeover program 71 (step S13).

According to the examples illustrated in Fig. 5 to Fig. 9, the CPU 61 determines whether the volume of "VE1" confirmed at step S12 can be newly mapped as an external connection to the storage apparatus 2 of "VW2" (storage apparatus 2 having the storage ID 81A of "2") as the switch destination volume of "VC2."

In this case, the CPU 61 will make the foregoing determination by applying the conventional processing of external connection on the condition that the storage apparatus 2 having the storage ID 81A of "2" is able to recognize the "VE3," and based on the number of external connections that are set.The CPU 61 proceeds to step S14 if external connection is possible (step S13: YES), and proceeds to step S16 if external connection is not possible (step S13: NO). In other words, the CPU 61 proceeds to step S13 if the "VE3" can be externally connected to the storage apparatus 2 having the storage ID 81A of "2," and proceeds to step S16 is such external connection is not possible.

Subsequently, if there is an external VOL 84B that cannot be externally connected, the CPU 61 notifies the user to such effect by issuing a warning based on the storage operation takeover program 71 (step S14). The CPU 61 ends the processing at step S14, and thereafter proceeds to step S15.

Subsequently, the CPU 61 maps the external VOL 84B confirmed at step S12 to the switch-side storage apparatus 2 as an external connection based on the storage operation command program 73 (step S15).According to the examples illustrated in Fig. 5 to Fig. 9, the CPU 61 externally connects the storage apparatus 2 having the storage ID 81A of "2" as the switch-side storage apparatus 2 to the external VOL 84B of "VE3" confirmed at step S12.

In other words, if the volume ID 81 B of the virtual volume 11 in the externally connected switch-side storage apparatus 2 is "VW3," the CPU 61 performs data migration between the "VC3" and the "VW3." Here, the CPU 61 will issue a data migration command at step S7 based on this parameter. As described above, the CPU 61 ends the processing at step S15, and thereafter proceeds to step S8.

Meanwhile, if there is no volume that can be mapped to the external VOL 84B confirmed at step S12 based on the storage operation takeover program 71 (step S13: NO), the CPU 61 notifies an error to the user, does not proceed to step S8, and ends this flowchart (step S16).

Like this, with the computer system 1, even if a failure or the like occurs during data migration and the storage operation of the first storage apparatus 2 cannot be continued, based on this flowchart, a volume required as the migration destination can be set to the switch-side (second) storage apparatus 2 for continuing the storage operation.

With the computer system 1, similar operations can be used to handle the operation of data replication. In other words, with the computer system 1, by treating the virtual volume 11 and the external VOL 84B set as the migration destination in the data migration as the data replication destination before the switch, the switch-side storage apparatus 2 may set the replication destination as with the volume setting of the migration destination, and thereby perform replication processing.

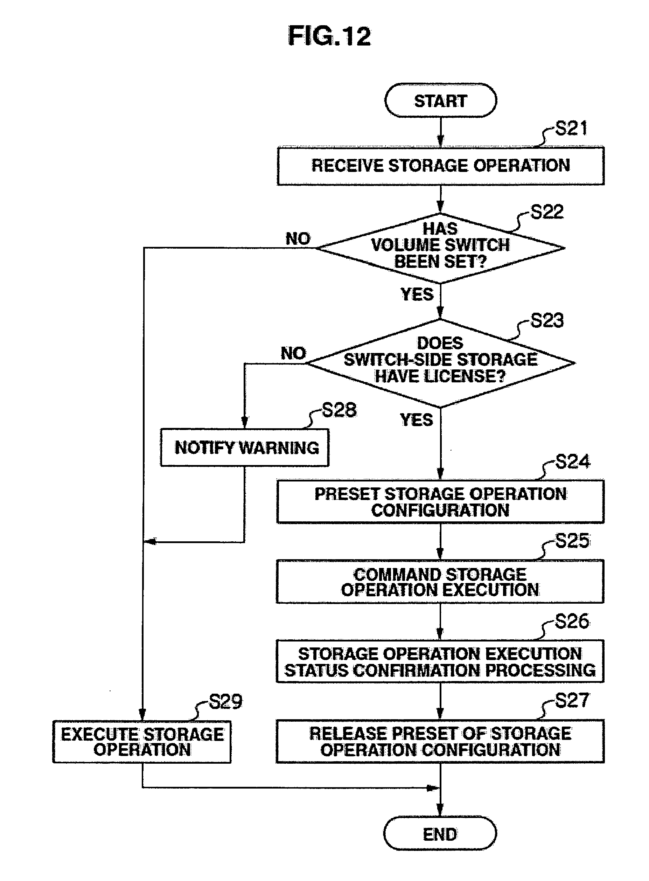

Fig. 12 is an example of a flowchart concerning the volume operation designated by the user in the third embodiment of the present invention.

In Fig. 12, the processing of the storage operation command program 73 and the storage operation reception program 74 of the management computer 5 is performed by the CPU 61.

The difference between this embodiment and the first and second embodiments described above is that the volume of the switch-side storage apparatus 2 is set when the storage operation is received. In this embodiment, if the performance of the storage operation ends normally without any switch, the preset of the storage operation of the switch-side storage apparatus 2 is released.

In this flowchart, focus is placed on the operation to be performed to a single volume for simplification. If there are a plurality of volumes, this flowchart may be repeatedly executed. Even if a plurality of volumes are designated, if all of them are to be checked, this can be handled the same way since the operation of a single volume is sequentially performed in each step.

Foremost, the CPU 61 receives a storage operation from the user based on the storage operation reception program 74 (step S21). Specifically, the CPU 61 receives the command of data shredding or data migration processing from the user via the management computer 5 according to this conventional method. The CPU 61 ends the processing at step S21, and thereafter proceeds to step S22.

Subsequently, the CPU 61 determines whether a volume switch has been set based on the storage operation reception program 74 (step S22). Specifically, the CPU 61 determines that a volume switch has been set if the volume stored as the execution VOL 82E stored in the virtual volume information table 82 is the target volume of the storage operation. The CPU 61 proceeds to step S23 if a volume switch has been set (step S22: YES), and proceeds to step S29 if a volume switch has not been set (step S22: NO).

For example, when considering a case where data shredding is not registered in the execution function 82F regarding the information in which the switch ID 82A of the virtual volume information table 82 is "1" according to Fig. 6, the CPU 61 will proceed to the processing at step S23 if it requests data shredding to the "VC1" since this means that a volume switch has been set based on the information of the execution VOL 82E.

Subsequently, the CPU 61 determines whether the switch-side storage apparatus 2 has a license based on the storage operation reception program 74 (step S23). For this determination, the CPU 61 performs similar processing as the processing of step S5 shown in the flowchart of Fig. 10. The CPU 61 proceeds to step S24 if the switch-side storage apparatus 2 has a license (step S23: YES), and proceeds to step S28 if the switch-side storage apparatus 2 has no license (step S23: NO). As in the case of step S5 of Fig. 10, if the "VC1" is the execution VOL 82E, the CPU 61 proceeds to step S24 since this also means that the switch-side storage apparatus 2 has a license.

Subsequently, the CPU 61 confirms the storage operation configuration based on the storage operation reception program 74 (step S24). For this confirmation, the CPU 61 performs similar processing as the processing at step S7 shown in the flowchart of Fig. 10 or the processing shown in the flowchart of Fig. 11. Nevertheless, if the CPU 61 is to perform at step S24 the processing corresponding to the processing at step S16 of Fig. 11, it may also issue a warning without ending the processing based on an error and then proceed to the subsequent step. The CPU 61 ends the processing at step S24, and thereafter proceeds to step S25.

Subsequently, the CPU 61 issues a storage operation execution command of the target volume to the target storage apparatus 2 based on the storage operation command program 73 (step S25). The CPU 61 ends the processing at step S25, and thereafter proceeds to step S26.

Subsequently, the CPU 61 performs the storage operation execution status confirmation processing based on the storage configuration monitoring program 72 (step S26). Specifically, the CPU 61 confirms whether the volume switch has been implemented. The volume switch detection processing is similar to step S2 of Fig. 10, but in this flowchart, this processing is performed until the storage operation at step S25 is complete.

If the volume switch is implemented before the storage operation is complete, the CPU 61 proceeds to the processing shown in the flowchart of Fig. 10. If the volume switch is not performed until the storage operation is complete, the CPU 61 proceeds to step S27.In other words, if the volume switch is not performed until the storage operation is complete, the CPU 61 performs the storage operation configuration preset release processing based on the storage operation reception program 74 (step S27). Specifically, the CPU 61 performs the processing for returning the preset set at step S24 to the environment before the execution of step S24 in the switch-side storage apparatus 2. The CPU 61 ends the processing at step S27, and thereafter ends this flowchart.

Meanwhile, if the switch-side storage apparatus 2 has no license (step S23: NO), the CPU 61 warns the user that the switch-side storage apparatus 2 has no license based on the storage operation reception program 74 (step S28). The CPU 61 ends the processing at step S28, and thereafter proceeds to step S29.

Subsequently, the CPU 61 issues a storage operation execution command based on the storage operation command program 73 (step S29). This processing will be a conventional storage operation command irrespective of the setting of the volume switch. The CPU 61 ends the processing at step S29, and thereafter ends this flowchart.

Like this, after the CPU 61 performs the data migration processing at step S29 with the storage apparatus 2 before the switch, it thereafter changes the external volume 31 to be accessed from the virtual volume 11 to be subject to the volume switch. Specifically, according to the examples illustrated in Fig. 5 to Fig. 9, the CPU 61 will migrate data from the "VC2" to the "VC3" according to the data migration information table 85. After this data migration is complete, the CPU 61 changes the access of the "VW2" as the virtual volume 11 after the switch from "VE2" to "VE3" as the external volume 31 of the migration destination VOL 85C of "VC3." This processing is commanded to the storage apparatus 2 after the switch by the storage operation command program 73 (CPU 61) of the management computer 5.

If the internal real volume 18 of the storage apparatus 2 before the switch is designated as the migration destination volume, since the execution of the data migration cannot be reflected in the virtual volume 11 of the storage apparatus 2 after the switch, the CPU 61 may indicate an error for this data migration, or ask the user whether to release the setting of the volume switch or to execute the data migration.

Like this, with the computer system 1, according to this embodiment, the storage operation can be continuously performed in anticipation of the volume switch by setting the storage operation of the volume switch-side storage apparatus 2 beforehand in the timing of performing the storage operation.

With the computer system 1, instead of actually setting the environment of the storage operation in the switch-side storage apparatus 2, the volume to be used may be reserved, and the environment may be set from the time the switch is actually implemented. In this case, the computer system 1 will release the reservation information at step S27.

With the computer system 1, it is also possible to separately provide processing for causing the user to confirm the environment of the switch-side storage apparatus 2 before receiving the storage operation. For example, the computer system 1 uses the processing of step S22 to S24 to confirm whether the switch-side storage apparatus 2 is able to take over the storage operation. Here, the computer system 1 may end the processing before the preset is actually made at step S24.

With the computer system 1, it is also possible to determine that there is no data access from the host computer 4 upon receiving the data shredding operation, and release the host path setting at step S25 and step S29. With the computer system 1, the switch-side storage apparatus 2 may also delete the host path at step S24, and refrain from returning the deleted status of the host path at step S27.

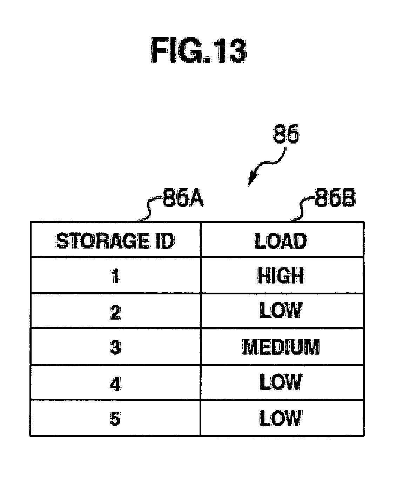

Fig. 13 is a diagram showing an example of the storage load information table 86 of the storage management information 75 in the fourth embodiment of the present invention. The storage load information table 86 is provided in addition to the storage management information 75 shown in Fig. 5 to Fig. 9.

The storage load information table 86 is configured from a storage ID 86A as the ID for identifying the storage apparatus 2 or the external storage apparatus 3, and a load 86B showing the load of the storage apparatus 2. Information of the load 86B is defined in three stages for simplification; namely, "high" for a high load, "low" for a low load, and "medium" for a load that is between "high" and "low." Information concerning the storage load information table 86 is acquired by the storage configuration monitoring program 71 of the management computer 5 based on the storage configuration program 21 of the storage apparatus 2.

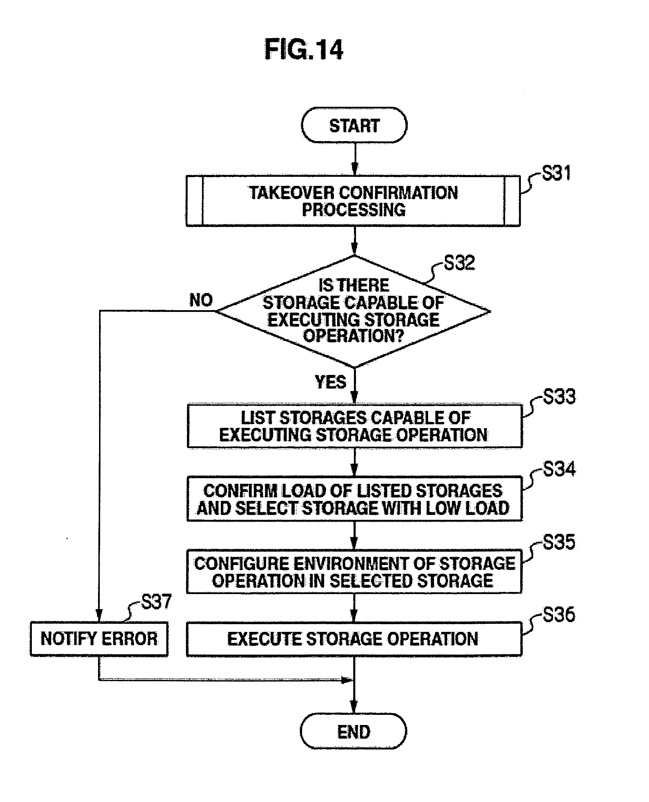

Fig. 14 is an example of a flowchart concerning the operation takeover processing during the volume switch in the fourth embodiment of the present invention.

In Fig. 14, the processing of the storage operation takeover program 71 and the storage configuration monitoring program 72 of the management computer 5 is performed by the CPU 61.

Foremost, the CPU 61 performs the takeover confirmation processing based on the storage operation takeover program 71 and the storage configuration monitoring program 72 (step S31). The takeover confirmation processing of step S31 is the processing of the respective steps of step S1 to step S4 of the flowchart shown in Fig. 10. The CPU 61 proceeds to step S32 if the determination is "YES" at step S4 (step S4: YES).

Subsequently, the CPU 61 determines whether the storage operation that was being performed in the execution VOL 82E can be executed in a storage apparatus other than the switch-side storage apparatus 2 based on the storage operation takeover program 71 (step S32). Specifically, the CPU 61 performs the following processing. (1) The CPU 61 selects the storage apparatuses 2 retaining the real volume actually storing the data of the virtual volume 11 to be subject to a volume switch or the storage apparatuses 2 that are operable as the virtual volume 11 on the side of the storage apparatus 2 after the switch, or as the virtual volume 11 by externally connecting the real volume storing the data. For simplification, the storage apparatuses 2 before the switch are determined to be inoperable and excluded from the selection candidate. (2) The CPU 61 selects storage apparatuses 2 among the storage apparatuses 2 selected at (1) above that are able to secure the volume required for the storage operation (migration destination volume in the case of data migration and replication destination volume in the case of data replication) such as data migration, although it is different from the volume switch target.

Specifically, in the case of data migration, the CPU 61 selects the storage apparatus 2 that is able to perform data migration processing from the migration source volume to the migration destination volume. In addition, if the configuration does not enable data migration with only the external storage apparatus 3 such as from the internal real volume 18 to the external volume 31, the CPU 61 removes the external storage apparatus 3 from the selection. (3) The CPU 61 selects the storage apparatuses 2 that have a storage operation license among the storage apparatuses 2 selected at (2) above. (4) The CPU 61 selects the storage apparatuses 2 capable of creating an environment that is able to execute the storage operation among the storage apparatuses 2 selected at (3) above.

If there is a target storage apparatus 2 as a result of the processing up to (4) above (step S32: YES), the CPU 61 proceeds to step S33, and proceeds to step S37 if there is no such target storage apparatus 2 (step S32: NO).

Subsequently, the CPU 61 lists the storage apparatuses 2 selected at step S32 based on the storage operation takeover program 71 (step S33). The CPU 61 ends the processing at step S33, and thereafter proceeds to step S34.

The specific processing of step S32 and step S33 is as follows taking the information of Fig. 5 to Fig. 9 as an example.

The CPU 61, as the processing of (1) at step S32, recognizes that the switch volume is the "VW1" of the second VOL 82C and that the actual data is the "VE1" of the external VOL 82D regarding the information in which the switch ID 82A of the virtual volume information table 82 is "1." If there is no other storage apparatus 2 that can be externally connected to the "VE1", the CPU 61 will consider the storage apparatus 2 having the storage ID 81A of "2" to which the "VW1" belongs and the storage apparatus 2 having the storage ID 81A of "3" to which the "VE1" belongs as the selection target storage apparatuses 2.

The CPU 61, as the processing of (2) at step S32, considers the selection target storage apparatuses 2 in this processing to be the same as the storage apparatuses 2 selected in (1) above since the operation of the switch ID 82A of "1" is data shredding.

The CPU 61, as the processing of (3) at step S32, confirms whether there is a data shredding license, and, since the storage apparatuses 2 respectively having the storage ID 81A of "2" and the storage ID 81A of "3" both have a data shredding license, leaves the storage apparatuses 2 having the storage ID 81A of "2" and the storage ID 81A of "3" as selection targets.

The CPU 61, as the processing of (4) at step S32, in the case of data shredding, considers the storage apparatus 2 having the storage ID 81A of "2" as the target storage apparatus 2 if it is externally connected to be able to access the "VE1"; that is, if it is operable after the switch since this means that the environment can be created. The CPU 61 considers the storage apparatus having the storage ID 81A of "3" as the target storage apparatus 2 capable of performing data shredding if the environment enables normal operation since the storage operation is the data shredding of a real volume in the storage apparatus 2.

Thus, the CPU 61 determines that there is a storage apparatus 2 capable of executing the storage operation at step S32, and then proceeds to step S33. The CPU 61, at step S33, lists the storage apparatus 2 having the storage ID 81A of "2" and the storage apparatus 2 having the storage ID 81A of "3" as the selected storage apparatuses 2.

Subsequently, the CPU 61 confirms the load of the storage apparatuses listed at step S33 and selects the storage apparatus 2 with a low load based on the storage operation takeover program 71 (step S34). Specifically, the CPU 61 selects the storage apparatus 2 with a low load based on the information of the storage load information table 86.

According to the example illustrated in Fig. 13, the CPU 61 recognizes that the load of the storage apparatus 2 having the storage ID 86A of "2" is "low," and the load of the storage apparatus 2 having the storage ID 86A of "3" as "medium." In other words, the CPU 61 recognizes that the storage apparatus 2 having the storage ID 86A of "2" is the storage apparatus 2 with a low load.

Thus, the CPU 61 will select the storage apparatus 2 having the storage ID 86A of "2" at step S34. In this embodiment, there may be cases where the information of the load 86B is the same. In such a case, the CPU 61 uniquely selects a storage apparatus 2 by setting a priority; for instance, giving priority to the storage apparatus 2 of the switch destination, giving priority to the order of the storage ID 86A, and so on. The CPU 61 ends the processing at step S34, and thereafter proceeds to step S35.

Subsequently, the CPU 61 configures a storage operation environment in the storage apparatus 2 selected at step S34 based on the storage operation takeover program 71 (step S35).

According to the example from step S34, since the CPU 61 selected the storage apparatus 2 having the storage ID 86A of "2" at step S34, the data shredding that was performed in the storage apparatus 2 before the switch will be performed in the storage apparatus 2 having the storage ID 86A of "2"; that is, the storage apparatus 2 of the switch destination. However, since the configuration differs from the data migration, there is no need to change the configuration. The CPU 61 ends the processing at step S35, and thereafter proceeds to step S36.

Subsequently, the CPU 61 commands the storage apparatus 2 selected at step S34 to perform the storage operation based on the storage operation command program 73 (step S36).

According to the example from step S34, since the CPU 61 selected the storage apparatus 2 having the storage ID 86A of "2" at step S34, the data shredding that was performed in the storage apparatus 2 before the switch will be performed in the storage apparatus 2 having the storage ID 86A of "2"; that is, the storage apparatus 2 of the switch destination. The CPU 61 ends the processing at step S36, and thereafter ends the processing of this flowchart.

Meanwhile, if there is no target storage apparatus 2 (step S32: NO), the CPU 61 notifies an error to the user to the effect that the storage operation cannot be taken over based on the storage operation takeover program 71 (step S37). The CPU 61 ends the processing at step S37, and thereafter ends the processing of this flowchart.

Like this, with the computer system 1, based on the processing of this flowchart, even if a failure or the like occurs and the processing cannot be continued when a storage operation was being performed to a certain volume, the storage operation can be continued with another storage apparatus 2.

If there is a case where the computer system 1 systematically stops the storage apparatus 2 and switches the volume to continue the processing in another storage apparatus 2, a warning may be notified when the switch is made if the storage operation is being performed. The computer system 1 may also cause the user to select whether to take over and perform the storage operation before the switch.

With the computer system 1, although a load was used to select the storage apparatus to perform the storage operation at step S34, the user may select the storage apparatus 2 to perform the storage operation in advance.

With the computer system 1, it is also possible to provide a step for validating the license in the storage apparatus 2 to perform the storage operation in the confirmation of the license at step S32. In other words, with the computer system 1, the valid duration of the license may be extended by invalidating the license of the storage apparatus 2 that will not perform the storage operation, and adapting the license only when it is validated. The computer system 1 may also bill a license fee only to a volume with a validated license if the license fee is to be changed according to the volume capacity of the license. The computer system 1 may also invalidate the license if the storage operation is taken over in the volume before the switch. If the license is invalidated in the computer system 1, the charge may be reduced for the portion in which the license fee was invalidated.

With the computer system 1, at step S32, if the storage operation to be taken over is data migration, such data migration can be performed between the virtual volumes 11 in the same storage apparatus 2, but there are cases where the external volume 31 storing the actual data is located in different external storage apparatuses 3. In this case, the computer system 1 will migrate data not with the data migration using the external storage apparatus 2, but with the remote replication operation between external storage apparatuses 3. Thus, the computer system 1 may select two external storage apparatuses 3 as the storage apparatuses 2 to be selected. Nevertheless, with the computer system 1, in consideration of the online performance of data migration, the determination may be made such that the data migration can only be taken over by the storage apparatus 2 when such data migration extends across external storage apparatuses 3.

The computer system 1 may also delete the mapping of the virtual volume 11 and the external volume 31 if the storage operation of the data shredding itself is complete, for safety reasons, in the storage operation of data shredding in this flowchart. If the configuration of the same storage apparatus 2 is to be used once again after the data shredding, the computer system 1 may also acquire a request from the user and maintain the mapping of the virtual volume 11 and the external volume 31. Further, if the storage operation is selected to be performed in the external volume 31, the computer system 1 may delete the mapping of the virtual volume 11 and the external volume 31 at such point in time.

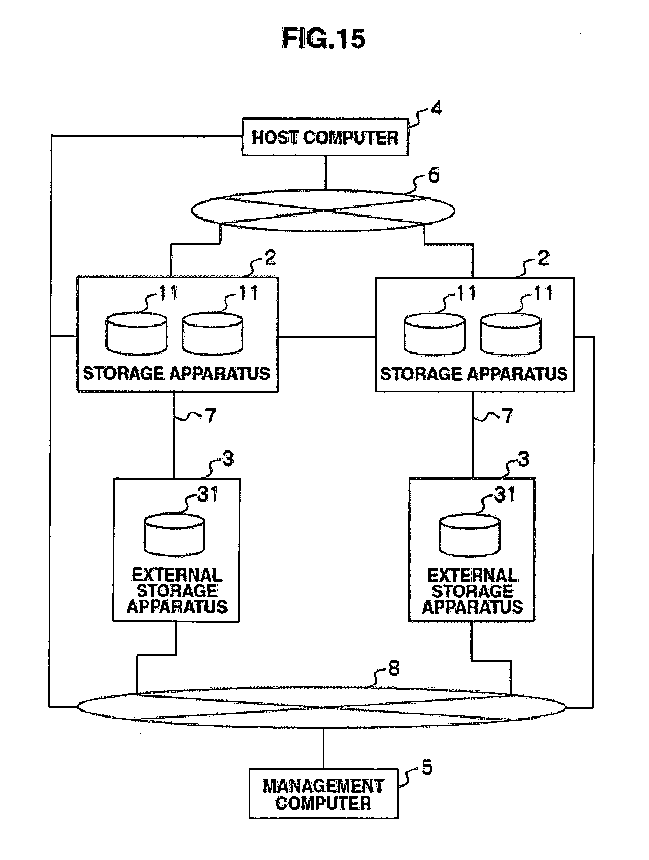

Fig. 15 is a diagram showing an example of the configuration of the computer system 1 according to the fifth embodiment of the present invention.

The difference with Fig. 1 is that the virtual volume 11 of the storage apparatus 2 has one external volume 31 for storing real data separately from the other virtual volumes. Thus, with the computer system 1, synchronous replication is performed between the virtual volumes of the storage apparatuses 2 to unify the data and enable the volume switch. In this case, with the computer system 1, since the I/O processing program 51 of the host computer 4 switches the volume without stopping the host computer 4, the volume of the volume ID 81 B before the switch may be taken over by the volume after the switch.

The computer system 1 of this embodiment is also able to take over the storage operation according to the processing of the flowchart of the previous embodiments. Nevertheless, with the computer system 1, in the setting of a migration destination volume that is separate from the volume switch as with data migration, it will suffice so as long as the migration destination volume before the switch and the migration destination volume after the switch have different real volumes. Accordingly, with the computer system 1, it is not necessary to perform step S12 in the flowchart of Fig. 11, and it will suffice so as long as it is possible to determine whether the switch-side migration destination volume has been prepared in the processing at step S13.

With the computer system 1, since the real volume exists separately in the volume before the switch and in the volume after the switch, the storage operation can be executed in parallel in the volume before the switch and in the volume after the switch.

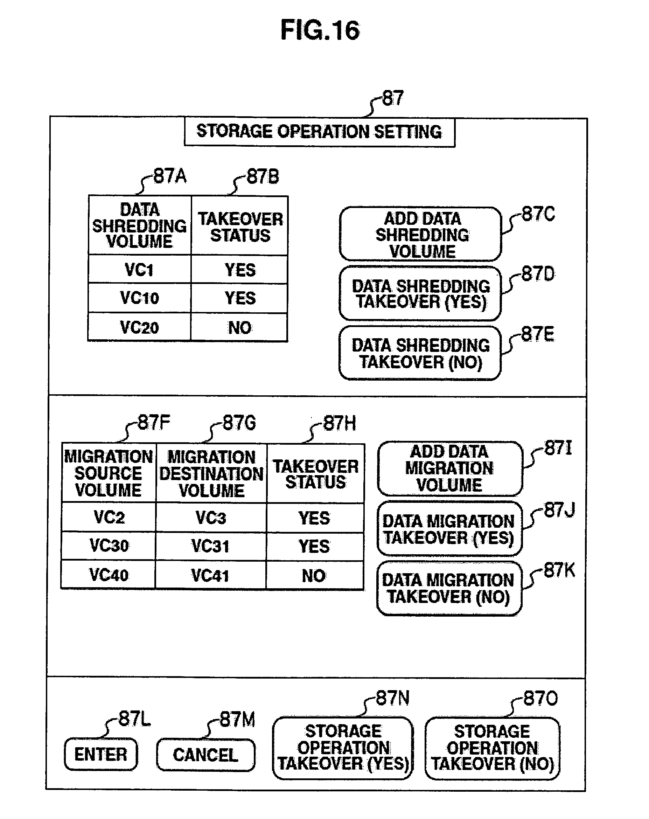

Fig. 16 shows a storage operation setting screen 87 for the user to input the setting of the storage apparatus 2 according to the sixth embodiment of the present invention. The storage operation setting screen 87 is displayed on the display unit of the I/O apparatus 62 of the management computer 5.

In this explanation also, for the sake of simplification, an example of a case relating to data shredding and data migration is explained.

The storage operation setting screen 87 displays a data shredding volume 87A for designating the data shredding volume, and a takeover status 87B for designating whether to continue the data shredding operation during the volume switch when a failure occurs in the storage apparatus 2 during the performance of the data shredding operation and such operation cannot be continued. The storage operation setting screen 87 also displays a data shredding volume ADD button 87C, a data shredding takeover YES button 87D and a data shredding takeover YES button 87E as buttons to be used for adding columns for inputting data of the data shredding volume 87A and the takeover status 87B.

The storage operation setting screen 87 also displays, for setting the data migration operation, a migration source volume 87F for designating the migration source volume, a migration destination volume 87G for designating the migration destination volume, and a takeover status 87H for designating whether to continue the data migration operation during the volume switch when a failure occurs in the storage apparatus 2 during the performance of the data migration operation and such operation cannot be continued. The storage operation setting screen 87 also displays a data migration volume ADD button 871, a data migration takeover YES button 87J and a data migration takeover YES button 87K as buttons to be used for inputting data of the migration source volume 87F, the migration destination volume 87G, and the takeover status 87H.

The storage operation setting screen 87 also displays an ENTER button 87L as the button for notifying the input decision of the user to the management computer 5, and a CANCEL button 87M as the button for canceling the input.

In the storage operation setting screen 87, data of the volume ID81B is input to the data shredding volume 87A, the migration source volume 87F, and the migration destination volume 87G.

In the storage operation setting screen 87, "YES" or "NO" is input as the value of the takeover status 87B, 87H. Here, if "YES" is designated in the takeover status 87B, 87H of the storage operation setting screen 87, the takeover of the respective storage operations is performed with the storage apparatus 2 after the volume switch, and, if this designation is "NO," the takeover of the respective storage operations is not performed after the volume switch. The storage operation setting screen 87 may also display a default value (for instance, "YES") when a column is added in order to reduce the user's input operation.

With the storage operation setting screen 87, if the user wishes to input the information of "YES" for the takeover in all operation target volumes regarding the respective storage operations, in the case of data shredding, the user presses the data shredding takeover YES button 87D. Meanwhile, if the user wishes to input the information of "NO" for the takeover, the user presses the data shredding takeover NO button 87E. In the storage operation setting screen 87, in the case of data migration, if the user wishes to input the information of "YES" for the takeover, the user presses the data migration takeover YES button 87J, and, if the user wishes to input the information of "NO" for the takeover, the user presses the data migration takeover NO button 87K.

In the storage operation setting screen 87, if the user wishes to input the information of "YES" for the takeover regarding all operation target volumes of all storage operations, the user presses the storage operation takeover YES button 87N, and, if the user wishes to input the information of "NO" for the takeover, the user presses the storage operation takeover NO button 870.

The management computer 5 manages the information of the storage operations designated in this screen with the management table in the storage management information 75. The management computer 5 also manages the information concerning the takeover status in the storage management information 75. Here, the management computer 5 does not store information concerning volumes that will not be taken over in the execution function 82F of the virtual volume information table 82. The management computer 5 may also add a new column of "takeover status" in the virtual volume information table 82 and store "YES" or "NO" therein to determine whether to take over the actual storage operation.

The CPU 61 of the management computer 5 determines whether to perform the storage operation takeover according to the flowcharts shown in Fig. 10 and Fig. 12. Specifically, the CPU 61 may confirm the storage operation with the volume in which the takeover is "YES" at step S3 in the flowchart of Fig. 10, and execute the processing of step S4 onward only to the confirmed volumes. The CPU 61 may also confirm the information of the takeover status at step S23 in the flowchart of Fig. 12 and proceed to step S28 if there is no takeover, and proceed to step S24 if there is a takeover and a volume switch as been set.

Although data shredding, data migration, and data replication have been explained as the storage operation in the first to sixth embodiments, the computer system 1 can also be provided to other operations.

For example, the storage operation may also include the path setting to the volume, protection (WORM) setting of the volume, cache resident setting of the volume, port priority setting, virtual pool volume setting of the volume, cache partition/allocation setting, partition setting of the storage apparatus 2, and so on. With the computer system 1, if a failure occurs in the storage apparatus 2 or the volume before the switch while the foregoing setting or the release processing is being performed, that storage operation can be taken over and continued by the switch-side storage apparatus 2 or the volume as a result of performing the processing of the first to fifth embodiments.

With the computer system 1, even in storage operations such as cache partitioning or the partition processing of the storage apparatus 2 that are unrelated to the volume switch setting performed during the creation of the volume, if the storage apparatus 2 is switched, the management computer 5 may command the storage apparatus 2 to perform the storage operation in the switched storage apparatus 2.

In the first to sixth embodiments, with the computer system 1, it is not necessary to give consideration to the processing continuity of the host computer 4 regarding the volume switch processing. In other words, if the computer system 1 is to dispose one storage apparatus 2 and recreate the computer system 1 with another storage apparatus 2, the management computer 5 may recognize the storage operation that was being performed up to the foregoing disposal by causing the user to designate the point in time that the recreation was implemented with the separate storage apparatus 2, and cause the separate storage apparatus 2 to take over the storage operation and then execute the storage operation once again. In this case, the computer system 1 must be loaded with the I/O processing program 51 of the host computer 4.

As described above, with the computer system 1, if the access of the host computer 4 to a volume of the storage apparatus 2 before the switch is switched to the volume of the storage apparatus 2 after the switch, and the storage operation to the volume of the storage apparatus 2 before the switch is being performed at such point in time, an environment that enables the operation of the function of the storage apparatus 2 operating in the volume of the storage apparatus 2 before the switch to be performed with the storage operation in the volume of the storage apparatus 2 after the switch is created, and the storage operation operating in the volume of the storage apparatus 2 before the switch is executed in the volume of the storage apparatus 2 after the switch.

Thus, with the computer system to perform the volume switch, the storage apparatus 2 after the switch is able to take over the access processing of the host computer 4 in the storage apparatus 2 before the switch as well as take over the storage operation such as data shredding and data migration according to the business operation when the volume is switched.

The present invention can be broadly applied to computer systems that take over the storage operation among a plurality of storage apparatuses.

## Claims

1. A computer system, comprising:
a first storage apparatus including a first volume for storing data sent from a host computer;
a second storage apparatus including a first virtual volume as a virtualization of a volume of the first storage apparatus, and for providing the first virtual volume to the host computer;
a third storage apparatus including a second virtual volume as a virtualization of a first volume of the first storage apparatus which is the same as the first virtual volume, and for switching the access to the first virtual volume of the host computer and providing the second virtual volume to the host computer; and
a management computer for managing the first storage apparatus, the second storage apparatus, and the third storage apparatus;
wherein the management computer includes:
a detection unit for detecting the operation of the first virtual volume upon switching the access to the first virtual volume of the host computer to the second virtual volume; and
an execution command unit for issuing a command to execute the operation of the first virtual volume detected with the detection unit in the second virtual volume of the third storage apparatus when the access is switched to the second virtual volume.

2. The computer system according to claim 1,
wherein the second storage apparatus includes a third virtual volume as a virtualization of a second volume of the first storage apparatus;
wherein the third storage apparatus includes a fourth virtual volume as a virtualization of the second volume of the first storage apparatus which is the same as the third virtual volume;
wherein the detection unit detects the operation of data migration from the first virtual volume to the third virtual volume; and
wherein the execution command issues a command to execute the operation of data migration from the first virtual volume to the third virtual volume detected with the detection unit in the second virtual volume and the fourth virtual volume of the third storage apparatus when the access is switched to the second virtual volume.

3. The computer system according to claim 1,
wherein the detection unit detects the switch setting between the first virtual volume and the second virtual volume upon receiving the operation to the first virtual volume from the user; and
wherein the execution command unit issues a command to execute the operation of the first virtual volume after setting the environment for executing the operation of the first virtual volume in the second virtual volume, and releases the environmental setting for executing the operation of the first virtual volume in the second virtual volume after the operation of the first virtual volume is complete.

4. The computer system according to claim 1,
wherein the execution command unit determines the operational status of the first storage apparatus and the third storage apparatus, and commands the first storage apparatus or the third storage apparatus to execute the operation of the first virtual volume detected with the detection unit in the second virtual volume of the third storage apparatus.

5. The computer system according to claim 4,
wherein the execution command unit detects the load of the first storage apparatus and the third storage apparatus as the operational status, and commands the storage apparatus with a low load to execute the operation of the first virtual volume detected with the detection unit in the second virtual volume of the third storage apparatus.

6. The computer system according to claim 4, further comprising:
a fourth storage apparatus including a fifth virtual volume as a virtualization of the first volume of the first storage apparatus which is the same as the first virtual volume, and for switching the access to the first virtual volume of the host computer and providing the fifth virtual volume to the host computer;
wherein the execution command unit determines the operation status of the first storage apparatus, the third storage apparatus and the fourth storage apparatus, and commands the first storage apparatus, the third storage apparatus or the fourth storage apparatus to execute the operation of the first virtual volume detected with the detection unit in the second virtual volume of the third storage apparatus.

7. An operation takeover method of a computer system comprising:
a first storage apparatus including a first volume for storing data sent from a host computer;
a second storage apparatus including a first virtual volume as a virtualization of a volume of the first storage apparatus, and for providing the first virtual volume to the host computer;
a third storage apparatus including a second virtual volume as a virtualization of a first volume of the first storage apparatus which is the same as the first virtual volume, and for switching the access to the first virtual volume of the host computer and providing the second virtual volume to the host computer; and
a management computer for managing the first storage apparatus, the second storage apparatus, and the third storage apparatus;
wherein the operation takeover method comprises:
a first step of a detection unit of the management computer detecting the operation of the first virtual volume upon switching the access to the first virtual volume of the host computer to the second virtual volume; and
a second step of an execution command unit of the management computer issuing a command to execute the operation of the first virtual volume detected at the first step in the second virtual volume of the third storage apparatus when the access is switched to the second virtual volume.

8. The operation takeover method according to claim 7,
wherein the second storage apparatus includes a third virtual volume as a virtualization of a second volume of the first storage apparatus;
wherein the third storage apparatus includes a fourth virtual volume as a virtualization of the second volume of the first storage apparatus which is the same as the third virtual volume;
wherein the detection unit detects the operation of data migration from the first virtual volume to the third virtual volume; and
wherein, at the second step, a command is issued to execute the operation of data migration from the first virtual volume to the third virtual volume detected with the detection unit in the second virtual volume and the fourth virtual volume of the third storage apparatus when the access is switched to the second virtual volume.

9. The operation takeover method according to claim 7,
wherein, at the first step, the switch setting between the first virtual volume and the second virtual volume is detected upon receiving the operation to the first virtual volume from the user; and
wherein, at the second step, a command is issued to execute the operation of the first virtual volume after setting the environment for executing the operation of the first virtual volume to the second virtual volume, and the environmental setting for executing the operation of the first virtual volume to the second virtual volume is released after the operation of the first virtual volume is complete.

10. The operation takeover method according to claim 7,
wherein, at the second step, the operational status of the first storage apparatus and the third storage apparatus is determined, and the first storage apparatus or the third storage apparatus is commanded to execute the operation of the first virtual volume detected at the first step in the second virtual volume of the third storage apparatus.

11. The operation takeover method according to claim 10,
wherein, at the second step, the load of the first storage apparatus and the third storage apparatus is detected as the operational status, and the storage apparatus with a low load is commanded to execute the operation of the first virtual volume detected at the first step in the second virtual volume of the third storage apparatus.

12. The operation takeover method according to claim 10,
wherein the computer system further comprises a fourth storage apparatus including a fifth virtual volume as a virtualization of a first volume of the first storage apparatus which is the same as the first virtual volume, and for switching the access to the first virtual volume of the host computer and providing the fifth virtual volume to the host computer; and
wherein, at the second step, the operation status of the first storage apparatus, the third storage apparatus and the fourth storage apparatus is determined, and the first storage apparatus, the third storage apparatus or the fourth storage apparatus is commanded to execute the operation of the first virtual volume detected at the first step in the second virtual volume of the third storage apparatus.

13. The operation takeover method according to claim 7,
wherein the operation of the first virtual volume is the shredding of data of the first volume.

14. The operation takeover method according to claim 7,
wherein the management computer includes a designation unit for designating whether to perform the takeover of the operation of the first virtual volume.

15. A computer system, comprising:
a first storage apparatus including a first volume for storing data sent from a host computer;
a second storage apparatus including a first virtual volume as a virtualization of a volume of the first storage apparatus, and for providing the first virtual volume to the host computer;
a third storage apparatus including a second volume for storing the replication of data stored in a first volume of the first storage apparatus;
a fourth storage apparatus including a second virtual volume as a virtualization of a second volume of the third storage apparatus, and for switching the access to the first virtual volume of the host computer and providing the second virtual volume to the host computer; and
a management computer for managing the first storage apparatus, the second storage apparatus, the third storage apparatus and the fourth storage apparatus;
wherein the second storage apparatus includes a synchronous replication unit for sending data sent from the host computer to the fourth storage apparatus via synchronous replication; and
wherein the management computer includes:
a detection unit for detecting the operation of the first virtual volume upon switching the access to the first virtual volume of the host computer to the second virtual volume; and
an execution command unit for issuing a command to execute the operation of the first virtual volume detected with the detection unit in the second virtual volume of the fourth storage apparatus when the access is switched to the second virtual volume.
